Europäisches Patentamt

European Patent Office

Office européen des brevets

(11) Veröffentlichungsnummer : **0 204 101**
**B1**

(12) **EUROPÄISCHE PATENTSCHRIFT**

(45) Veröffentlichungstag der Patentschrift :
03.01.90

(21) Anmeldenummer : 86104710.8

(22) Anmeldetag : 07.04.86

(51) Int. Cl.⁵ : **F 16 C 29/06**

(54) **Linearkugellager.**

(30) Priorität : 10.04.85 DE 3512858

(43) Veröffentlichungstag der Anmeldung :
10.12.86 Patentblatt 86/50

(45) Bekanntmachung des Hinweises auf die Patenterteilung : 03.01.90 Patentblatt 90/01

(84) Benannte Vertragsstaaten :
BE CH DE FR GB IT LI NL SE

(56) Entgegenhaltungen :
FR–A– 1 263 179
FR–A– 2 341 066
GB–A– 2 093 536
US–A– 4 040 679
US–A– 4 391 473

(73) Patentinhaber : Deutsche Star GmbH
Ernst-Sachs-Strasse 90
D-8720 Schweinfurt 1 (DE)

(72) Erfinder : Ernst, Albert
Johannissteig 9
D-8729 Sand/Main (DE)

(74) Vertreter : Weickmann, Heinrich, Dipl.-Ing. et al
Patentanwälte Dipl.-Ing. H.Weickmann Dipl.-Phys.Dr.
K.Fincke Dipl.-Ing. F.A.Weickmann Dipl.-Chem. B.
Huber Dr.-Ing. H. Liska Dipl.-Phys.Dr. J. Prechtel
Postfach 860820
D-8000 München 86 (DE)

## Beschreibung

Die Erfindung betrifft ein Linearkugellager zur Führung eines Objekts auf einer zylindrischen Welle, umfassend

einen Lagerblock

mit einer daran angeformten, im wesentlichen planen Anlagefläche zur Anlage an dem Objekt,

mit Befestigungsmitteln zur Verbindung mit diesem Objekt und

mit einer Mehrzahl von Kugelschleifen, welche jeweils in Radialebenen — bezogen auf die Achse der zylindrischen Welle — angeordnet sind und jeweils eine radial innere, tragende Kugelreihe, eine radial äußere, rücklaufende Kugelreihe und — nahe den axialen Enden des Lagerblocks — Umlenkbogenkugelreihen zur Verbindung je einer radial inneren, tragenden Kugelreihe und einer radial äußeren, rücklaufenden Kugelreihe aufweisen, wobei die radial inneren Kugelreihen nach radial außen an über eine Zylinderinnenfläche verteilten, axial verlaufenden Tragflächen abgestützt sind und zwischen in peripherer Richtung beabstandeten Führungsflächen laufen,

wobei die radial äußeren Kugelreihen in Rückführungskanälen verlaufen,

wobei die Umlenkbogen-Kugelreihen durch eine konvexe, axial auswärts gerichtete Ringwulstfläche und durch konkave, axial einwärts gerichtete Halbbogenrinnen geführt sind,

wobei die Führungsflächen und die Halbbogenrinnen an einer Käfigbaugruppe angeordnet sind, welche über die Länge der Tragflächen sich erstreckende Führungsstege und an den axialen Enden der Führungsstege diese verbindende, die Halbbogenrinnen aufweisende Hakenflansche besitzt,

wobei diese Hakenflansche mit jeweils einer axial einwärts gerichteten Hakenendfläche an einer axial auswärts gerichteten Kanalmündungsfläche der Rückführungskanäle anliegen,

wobei diese Hakenflansche je eine Außenumfangsfläche zur Anlage an einer Innenumfangsfläche aufweisen und

wobei die Käfigbaugruppe in einer die Führungsstege schneidenden achsnormalen Trennebene in zwei Halbkäfige unterteilt ist.

Ein derartiges Linearkugellager ist durch offenkundige Vorbenutzung der Anmelderin und durch einen Prospekt « STAR Linear-Set mit Radial-Kugelbüchse » bekannt.

Bei der bekannten Ausführungsform sind die Kugelschleifen in einer von dem Lagerblock getrennt hergestellten Kugelbüchse untergebracht. Die Kugelbüchse ist aus der FR-A-2 341 066 bekannt. Diese bekannte Ausführungsform hat sich deshalb sehr bewährt, weil man bei Unterbringung der Kugelschleifen in einer von dem Lagerblock gesonderten Kugelbüchse diese Kugelbüchse in großer Serie fertigen und nachträglich mit verschiedenen Formen von Lagerblöcken zusammenbauen kann. Über Nachteile dieser bekannten Lösung ist bisher nichts veröffentlicht worden.

Es wurde nun seitens der Anmelderin erkannt, daß bei der bekannten Lösung doch gewisse Probleme auftreten können :

Durch den Einbau einer Kugelbüchse mit darin angeordneten Kugelschleifen in einen Lagerblock addieren sich Präzisionsfehler an dem Lagerblock und an der Kugelbüchse, so daß die Einhaltung der regelmäßig geforderten engen Toleranzen schwierig wird. Auch führt die räumliche Überlagerung von Kugelbüchse und Lagerblock zu großen Abmessungen mit entsprechend großem Gewicht. Große Abmessungen sind aber häufig im Hinblick auf beschränkte Einbauverhältnisse unerwünscht und großes Gewicht führt bei großen Beschleunigungen des Objekts zu vergrößerten Massekräften.

Ausgehend von dieser Erkenntnis wurde die Aufgabe gestellt, ein Linearkugellager der eingangs bezeichneten Art bei unverminderter Tragzahl und unverminderter Steifigkeit mit erhöhter Präzision herzustellen und gleichzeitig Gewicht und Abmessungen zu verringern.

Zur Lösung dieser Aufgabe wird erfindungsgemäß vorgeschlagen, daß die Tragflächen, die Rückführungskanäle, die Innenumfangsflächen und die axial auswärts gerichteten Kanalmündungsflächen an dem Material des einstückigen Lagerbocks angeformt sind.

Es hat sich gezeigt, daß die Herstellung der Tragflächen, der Rückführungskanäle, der Ringwulstfläche, der Innenumfangsflächen und der axial auswärts gerichteten Kanalmündungsflächen an dem Material des Lagerblocks mit hoher Wirtschaftlichkeit erfolgen kann, so daß der zu befürchten gewesene Nachteil des Abgehens von der Großserienfertigung von Standardkugelbüchsen für die Verwendung in Lagerblöcken unterschiedlicher Form zumindest ausgeglichen worden ist.

Die erfindungsgemäßen Linearkugellager sind beispielsweise zur Führung von Schlitten im Werkzeugmaschinenbau bestimmt.

Die erfindungsgemäßen Linearkugellager können so ausgebildet sein, daß sie die zylindrische Welle teilweise umfassen, d. h. mit einer Öffnung (Ringöffnung) ausgeführt ist. In diesem Falle kann die jeweilige Welle durch die Ringöffnung durchdringende Stützen innerhalb der Führungsstrecke abgestützt werden. Es ist aber auch möglich, die erfindungsgemäßen Linearkugellager vollrund auszubilden, so daß sie die jeweilige zylindrische Welle vollständig umfassen und diese nur außerhalb der jeweiligen Führungsstrecke abgestützt werden kann.

Es können Andrückmittel zum Andrücken der tragenden Kugeln gegen die zylindrische Welle vorgesehen sein. Bei Anordnung der Anlagefläche an einer von der Ringöffnung abgelegenen Seite des Lagerblocks kann im Hinblick auf eine Andrückmöglichkeit ein zu der Lagerfläche im wesentlichen paralleler Schlitz in eine zu der Anlagefläche im wesentlichen vertikale, achsparallele Seitenfläche des Lagerblocks eingelassen sein, welcher vorzugsweise bis annähernd an den Teilkreis der Rückführungskanäle herangeführt ist; dabei kann in einem auf einer Seite des Schlitzes gelegenen Teil des Lagerblocks eine zu der Schlitzebene im wesentlichen senkrechte Gewindebohrung aufgenommen sein, welche einen gegen den auf der anderen Seite der Schlitzebene gelegenen Teil des Lagerblocks verspannbaren Gewindebolzen aufnimmt. Generell gilt für die Schlitztiefe, daß sie einerseits groß genug sein muß, um eine vernünftige Einstellung zu erreichen, andererseits noch soviel Restwandstärke bestehen bleibt, daß eine ausreichende Festigkeit vorliegt. Es hat sich gezeigt, daß man mit dieser Ausführungsform der Radialspieleinstellung die Steifigkeit des Linearkugellagers gegen Biegemomente mit zu der Anlagefläche senkrechter Achse am wenigsten beeinträchtigt.

Die Tragflächen können entweder von einer Zylinderinnenfläche des Lagerblocks gebildet sein oder von Laufbahnrillen. Im Falle von Laufbahnrillen wird die Schmiegung erhöht; dadurch wird eine erhebliche Steigerung der Tragzahl und eine weitere Verbesserung der Steifigkeit erreicht.

Die Präzision kann weiter dadurch erhöht werden, daß die Führungsstegabschnitte der Halbkäfige in der Trennebene miteinander verzapft sind, wobei diese Verzapfung durch Fremdzapfen erfolgen kann, die in Aufnahmen an den einander zugekehrten Enden der Führungsstege eingesteckt werden oder durch komplementäre Zapfen- und Zapfenaufnahmen, die an den einander zugekehrten Enden der Führungsstege angeformt sind.

Der Lagerblock kann mit einem Schmierkanalsystem versehen sein, welches von einer auch bei Anbau des Lagerblocks an das Objekt frei zugänglichen Fläche des Lagerblocks ausgeht, um jederzeit Schmiermittel einbringen zu können. Ein solches Schmierkanalsystem läßt sich auf einfache Weise dadurch herstellen, daß in einer im wesentlichen achsnormalen Ebene ein zu der Anlagefläche im wesentlichen paralleler Primärkanal gebohrt wird und zum Anschluß an diesen Primärkanal von der Anlagefläche her ein Sekundärkanal gebohrt wird, der im Bereich der Anlagefläche durch einen Stopfen abgeschlossen wird. Dieser Sekundärkanal kann dann zwischen zwei benachbarten Kugelschleifen in die Zylinderinnenfläche des Lagerblocks münden. Auf diese Weise werden zwei Kugelreihen unmittelbar mit Schmiermittel versorgt. Die übrigen Kugelreihen können dann durch Schmiermittel versorgt werden, das von den unmittelbar versorgten Kugelreihen her über den Wellenumfang fließt. An den Hakenflanschen können zur Abdichtung des Schmiermittels gegen Austritt nach außen und zur Verhinderung des Eintritts von Schmutz und Fremdkörpern Dichtelemente angebracht sein und zwar können solche Dichtelemente an den Hakenflanschen jeweils im Bereich einer axial äußeren und radial inneren Ringkante angebracht werden. Für den Fall eines nur zur teilweisen Umfassung der zylindrischen Welle ausgebildeten Linearkugellagers ist es ferner möglich, an der Ringöffnung zugehörigen Kanten der Käfigbaugruppe Dichtleisten zur Anlage an der Welle vorzusehen.

Die Käfigbaugruppe kann durch Sicherungsringe in axialer Richtung gesichert sein, welche in an dem Lagerblock angeformten Aufnahmenuten eingerastet sind. Im Hinblick auf die Erzielung leicht bauender Linearkugellager mit geringem Gewicht ist es möglich, daß ohne Beeinträchtigung der Steifigkeit und der Tragzahl der Abstand der Zylinderinnenfläche von der Aufspannfläche 25 % bis 50 %, vorzugsweise 30 % bis 50 % des Durchmessers der zugehörigen Welle beträgt. Der Abstand von achsparallelen, zur Aufspannfläche im wesentlichen senkrechten Seitenflächen des Lagerblocks von der Zylinderinnenfläche kann 65 % bis 120 %, vorzugsweise 75 % bis 120 % des Durchmessers der zugehörigen Welle betragen.

Die beiliegenden Figuren erläutern die Erfindung anhand von Ausführungsbeispielen. Es stellen dar:

Fig. 1 eine Endansicht teilweise im Schnitt nach Linie I-I der Fig. 2 durch ein erfindungsgemäßes Linearkugellager;

Fig. 2 eine Draufsicht auf das Linearkugellager der Fig. 1;

Fig. 3 einen Schnitt nach Linie III-III der Fig. 1;

Fig. 4 einen Schnitt entsprechend demjenigen der Fig. 3 jedoch ohne Kugeln;

Fig. 5 einen Schnitt nach Linie V-V der Fig. 1;

Fig. 6 einen vergrößerten Teilausschnitt bei VI der Fig. 1;

Fig. 7 einen der Fig. 6 entsprechenden Teilausschnitt bei einer abgewandelten Ausführungsform; und

Fig. 8 einen der Fig. 6 entsprechenden Teilausschnitt bei einer weiteren abgewandelten Ausführungsform.

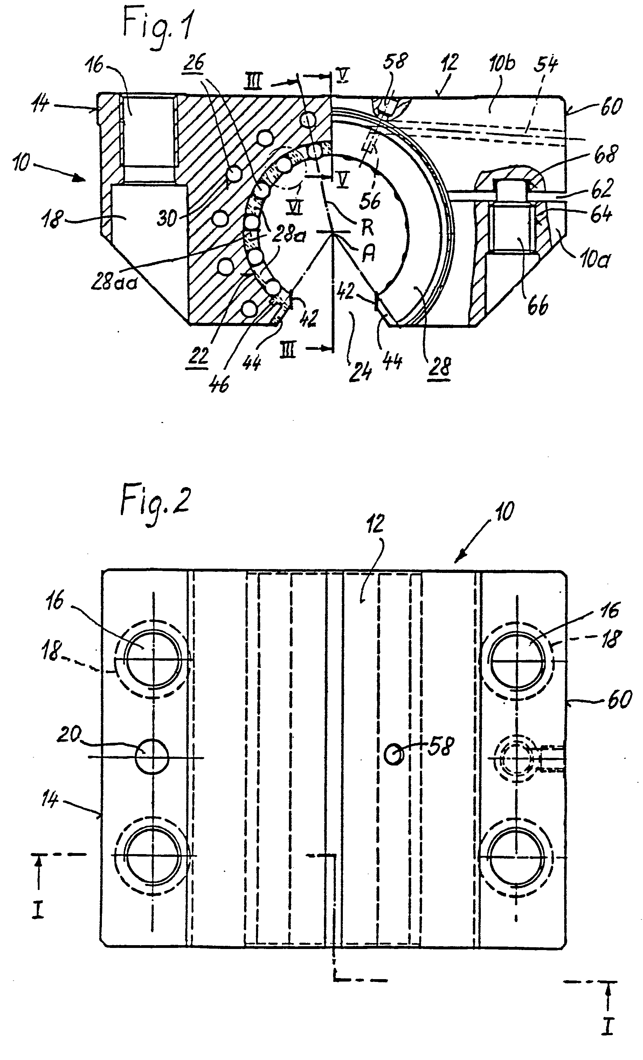

In Fig. 1 ist ein Lagerblock mit 10 bezeichnet. Dieser Lagerblock weist eine Aufspannfläche 12 auf, mit welcher der Lagerblock an dem jeweils zu führenden Objekt zur Anlage gebracht wird. Zum genauen seitlichen Positionieren des Lagerblocks 10 an dem jeweiligen Objekt dient eine Anschlagkante 14. Zur Befestigung des Lagerblocks 10 an dem jeweiligen Objekt sind Gewindebohrungen 16 vorgesehen. Es ist aber auch möglich, von unten her in die Durchgangsbohrungen 18 Bolzen einzuführen, die dann mit Gewindebohrungen an dem jeweiligen Objekt verschraubt werden.

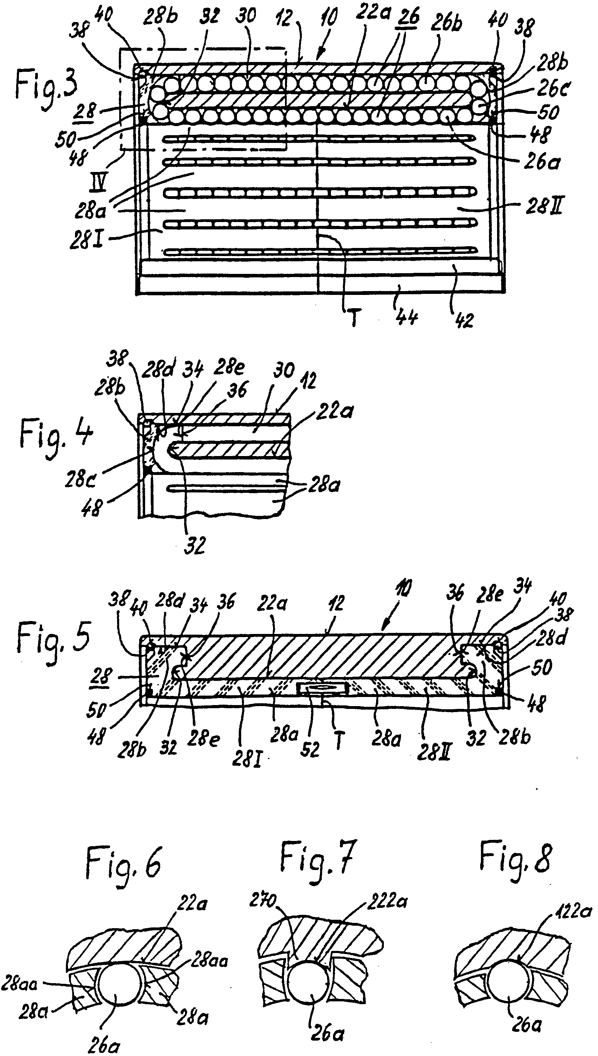

Eine Bohrung 20 (Fig. 2) gestattet eine Verstiftung.

Der Lagerblock 10 weist eine Bohrung mit einer Zylinderinnenfläche 22 auf. Die Bohrung ist offen durch eine Ringöffnung 24 in der der Anlagefläche 12 gegenüberliegenden Fläche. Zur Führung des Lagerblocks 10 auf einer von der Bohrung aufgenommenen zylindrischen Welle sind eine Vielzahl von Kugelschleifen 26 vorgesehen, die jeweils in einer Radialebene R bezogen auf die Achse A der zugehörigen, nicht eingezeichneten Welle liegen. Die Kugelschleifen 26 umfassen eine radial innere tragende Kugelreihe 26a, eine radial äußere rücklaufende Kugelreihe 26b und Umlenkbogenkugelreihen 26c.

Die radial innere tragende Kugelreihe 26a läuft gemäß Fig. 6 an einer Tragfläche 22a, die ein Teil der Zylinderinnenfläche 22 ist. Seitlich sind die Kugeln der radial inneren tragenden Kugelreihe 26a wie aus Fig. 1 und 6 zu ersehen, durch Führungsstege 28a geführt, an denen Führungsflächen 28aa ausgebildet sind. Die Führungsstege sind Teil einer Käfigbaugruppe 28, die in der achsnormalen Trennebene T in zwei Halbkäfige 28I und 28II unterteilt ist.

Die radial äußeren rücklaufenden Kugelreihen 26b sind in Rückführungskanälen 30 geführt. Die Umlenkbogenkugelreihen 26c sind durch eine axial nach außen gerichtete konvexe Ringwulstfläche 32 aus dem Material des Lagerblocks 10 und durch je eine einzelne, konkave axial einwärts gerichtete Halbbogenrille 28c geführt. Die Halbbogenrillen 28c sind an einem ringförmigen Hakenflansch 28b der Käfigbaugruppe 28 ausgeformt. Den Hakenflansch 28b erkennt man insbesondere in den Fig. 4 und 5. Der Hakenflansch 28b liegt mit einer äußeren Umfangsfläche 28d an einer inneren Umfangsfläche 34 des Lagerblocks 10 an. Der Hakenflansch 28b weist eine Hakenendfläche 28e auf, welche an einer Kanalmündungsfläche 36 des Lagerblocks 10 anliegt. Die Führungsstege 28a liegen an der Zylinderinnenfläche 22 an oder sind von dieser durch einen geringen Spalt beabstandet. Die Käfigbaugruppe 28 ist in dem Lagerblock in axialer Richtung durch zwei Sicherungsringe 38 fixiert, die in Aufnahmenuten 40 des Lagerblocks 10 eingerastet sind. In Umfangsrichtung ist die Käfigbaugruppe 28, wie aus Fig. 1 zu ersehen, durch Randlippen 44 festgelegt, welche an den Begrenzungsflächen der Ringöffnung 24 anliegen. Zusätzlich ist je eine Längsrippe 46 vorgesehen, die in eine Nut des Lagerblocks 10 eingreift.

An der Käfigbaugruppe 28 sind an deren axialen Enden Dichtelemente 48 angebracht, die zur Anlage an der zylindrischen Welle bestimmt sind. An der Käfigbaugruppe 28 sind ferner im Bereich der Ringöffnung 24 Dichtleisten 42 angebracht. Die Dichtelemente 48 und die Dichtleisten 42 sind angeklebt, in Nuten eingelegt oder durch Ultraschallverschweißung befestigt. Ihr Zweck ist es, den Austritt von Schmiermittel zu verhindern und den Eintritt von Schmutz zu den Kugelreihen zu unterbinden. Die Dichtelemente 48 und die Dichtleisten 42 bestehen aus Kunststoff oder elastomerem Werkstoff. Die Dichtelemente 48 sind in Ringnuten 50 des jeweiligen Halbkäfigs 28I bzw. 28II eingelegt.

Die einander zugekehrten Enden der Führungsstege 28a der beiden Halbkäfige 28I und 28II sind durch Stifte 52 gegeneinander gesichert und in Flucht gehalten. Die Stifte 52 können durch angeformte komplementäre Vorsprünge und Kammern ersetzt sein.

Das Linearkugellager besitzt, wie aus Fig. 1 zu ersehen, eine Nachschmiermöglichkeit mit einem Primärschmierkanal 54, der in einer achsnormalen Fläche im wesentlichen parallel zu der Anlagefläche 12 verläuft und sich mit einem Sekundärkanal 56 schneidet, der von der Anlagefläche 12 aus gebohrt ist und an der Zylinderinnenfläche 22 zwischen zwei aufeinanderfolgenden Kugelschleifen 26 also zwischen den jeweils radial inneren tragenden Kugelreihen dieser Kugelschleifen endet. Die Sekundärbohrung 56 ist an ihrem äußeren Ende durch einen Stopfen 58 verschlossen. Das durch die Schmiermittelkanäle 54, 58 von der Seitenfläche 60 her eingebrachte Schmiermittel gelangt zu den inneren tragenden Kugelreihen 26a der beiden benachbarten Kugelschleifen 26 und verteilt sich auf sämtliche anderen Kugelschleifen, in dem es über die Umfangsfläche der zylindrischen Welle fließt.

Zum Einstellen des Lagerspiels ist im Lagerblock 10 ein Schlitz 62 von der Seitenfläche 60 kommend eingeschnitten, der bis knapp an den Teilkreis der Rückführungskanäle 30 heranreicht und im wesentlichen parallel zu der Anlagefläche 12 ist. In dem Teil 10a des Lagerblocks 10 ist eine Gewindebohrung 64 eingelassen, die einen Spannbolzen 66 aufnimmt. Der Spannbolzen 66 drückt mit seinem oberen Ende in eine Pfanne 68 des auf der anderen Seite des Schlitzes 62 gelegenen Teils 10b des Lagerblocks 10. Durch Nach-Oben-Schrauben des Spannbolzens 66 kann der Teil 10a des Lagerblocks im Uhrzeigersinn um den am inneren Ende des Schlitzes 62 stehengebliebenen Materialsteg elastisch geschwenkt werden, wodurch das Radialspiel eingestellt werden kann. Dabei kann auch eine Vorspannung eingestellt werden, wodurch eine vergrößerte Steifigkeit erzielt wird. Es besteht auch die Möglichkeit zwei Einstellschlitze vorzusehen; der zweite Einstellschlitz könnte symmetrisch zu dem ersten Einstellschlitz bezogen auf eine durch die Achse A gehende vertikale Symmetrieebene in Fig. 1 angeordnet werden.

Es ist auch denkbar, die Ringöffnung 24 gegenüber der Darstellung gemäß Fig. 1 um 90° zu versetzen.

Zur Erhöhung der Tragzahl durch Verbesserung der Schmiegungsverhältnisse sind gemäß Fig. 8 Kugellaufrillen 122a vorgesehen. Die Kugellaufrillen bedingen zwar einen höheren Fertigungsaufwand, führen aber zu einer erheblichen Steigerung der Tragzahl und zur weiteren Verbesserung der Steifigkeit.

Gemäß Fig. 7 sind die Kugellaufrillen 222a auf Rippen 270 des Lagerblocks angeordnet.

Gegenüber der bisher bekannten Lagerausführung von der ausgegangen wurde, ergeben sich folgende Vorteile: Die Hüllkreistoleranz (Radialspiel) und die Höhentoleranz werden verringert. Während beim bekannten Linearkugellager die Hüllkreistoleranz von drei Größen bestimmt wird (Hülseninnendurchmesser der Kugelbüchse, Hülsenaußendurchmesser der Kugelbüchse, Innendurchmesser der Bohrung im Lagerblock) ist erfindungsgemäß nur noch eine Größe von Einfluß, nämlich der Durchmesser der Zylinderinnenfläche 22. Die Höhentoleranz, also das Maß zwischen der Anlagefläche 12 und der Achse der Zylinderinnenfläche 22 hängt nur noch von einer Größe nämlich der Bodendicke, d.i. der Abstand zwischen der Anlagefläche 12 und der Zylinderinnenfläche 22 ab. Nach dem Stand der Technik war diese Höhentoleranz von drei Größen abhängig, nämlich dem Hülseninnendurchmesser und dem Hülsenaußendurchmesser der Kugelbüchse und der Bodendicke des Lagerblocks.

Die Gewichtseinsparung gegenüber den eingangs diskutierten bekannten Ausführungsformen beträgt 60 bis 70 %. Die Abmessungen verringerten sich gegenüber dieser bekannten Ausführungsform wie folgt : Längenverminderung (in Achsrichtung gemessen) um 35 bis 42 % ; Breitenverminderung (senkrecht zur Fläche 60 gemessen) 16 bis 29 % ; Höhenverminderung senkrecht zur Anlagefläche 12 gemessen 27 bis 33 %. Bei einem üblichen Einbau von vier Lagereinheiten ergibt sich z. B. für einen Wellendurchmesser von 80 mm eine Gewichtseinsparung von ca. 186 kg. Die vier Lagereinheiten wiegen zusammen noch etwa 118 kg (gegenüber 304 kg bei der bekannten Anordnung). Dabei wird selbstverständlich von unverminderter Tragzahl und gleicher Steifigkeit ausgegangen.

Die Gewichtsverminderung ist besonders bei modernen Maschinen von großem Interesse, die mit immer größeren Geschwindigkeiten und damit größeren Beschleunigungen arbeiten, weil die Massenkräfte durch diese Gewichtseinsparungen erheblich reduziert werden, so daß auch die Antriebe schwächer und sparsamer ausgeführt werden können.

## Patentansprüche

1. Linearkugellager zur Führung eines Objekts auf einer zylindrischen Welle, umfassend
einen Lagerblock (10)
mit einer daran angeformten, im wesentlichen planen Anlagefläche (12) zur Anlage an dem Objekt,
mit Befestigungsmitteln (16, 18, 20) zur Verbindung mit dem Objekt und
mit einer Mehrzahl von Kugelschleifen (26), welche jeweils in einer Radialebene (R) — bezogen auf die Achse (A) der zylindrischen Welle — angeordnet sind und jeweils eine radial innere, tragende Kugelreihe (26a), eine radial äußere, rücklaufende Kugelreihe (26b) und — nahe den axialen Enden des Lagerblocks (10) — Umlenkbogen-Kugelreihen (26c) zur Verbindung je einer radial inneren, tragenden Kugelreihe (26a) und einer radial äußeren, rücklaufenden Kugelreihe (26b) aufweisen,
wobei die radial inneren Kugelreihen (26a) nach radial außen an über eine Zylinderinnenfläche (22) verteilten, axial verlaufenden Tragflächen (22a) abgestützt sind und zwischen in peripherer Richtung beabstandeten Führungsflächen (28aa) laufen,
wobei die radial äußeren Kugelreihen (26b) in Rückführungskanälen (30) verlaufen,
wobei die Umlenkbogen-Kugelreihen (26c) durch eine konvexe, axial auswärts gerichtete Ringwulstfläche (32) und durch konkave, axial einwärts gerichtete Halbbogenrinnen (28c) geführt sind,
wobei die Führungsflächen (28aa) und die Halbbogenrinnen (28c) an einer Käfigbaugruppe (28) angeordnet sind, welche über die Länge der Tragflächen (22a) sich erstreckende Führungsstege (28a) und an den axialen Enden der Führungsstege (28a) diese verbindende, die Halbbogenrinnen (28c) aufweisende Hakenflansche (28b) besitzt,
wobei diese Hakenflansche (28b) mit jeweils einer axial einwärts gerichteten Hakenendfläche (28e) an einer axial auswärts gerichteten Kanalmündungsfläche (36) der Rückführungskanäle (30) anliegen,
wobei diese Hakenflansche (28b) je eine Außenumfangsfläche (28d) zur Anlage an einer Innenumfangsfläche (34) aufweisen und
wobei die Käfigbaugruppe (28) in einer die Führungsstege (28a) schneidenden achsnormalen Trennebene (T) in zwei Halbkäfige (28I, 28II) unterteilt ist,
dadurch gekennzeichnet, dass die Tragflächen (22a), die Rückführungskanäle (30), die Innenumfangsflächen (34) und die axial auswärts gerichteten Kanalmündungsflächen (36) an dem Material des einstückigen Lagerblocks (10) angeformt sind.

2. Linearkugellager nach Anspruch 1, dadurch gekennzeichnet, dass es zur teilweisen Umfassung der zylindrischen Welle mit einer Öffnung (24) (Ringöffnung) ausgeführt ist.

3. Linearkugellager nach Anspruch 1, dadurch gekennzeichnet, daß es zur vollständigen Umfassung der zylindrischen Welle ausgebildet ist.

4. Linearkugellager nach einem der Ansprüche 1 bis 3, dadurch gekennzeichnet, daß es Andrückmittel (66) zum Einstellen des Radialspiels umfaßt.

5. Linearkugellager nach den Ansprüchen 1, 2 und 4, dadurch gekennzeichnet, daß bei Anordnung der Anlagefläche (12) auf einer von der Ringöffnung (24) abgelegenen Seite des Lagerblocks (10) ein zu der Lagerfläche im wesentlichen paralleler Schlitz (62) in eine zu der Anlagefläche (12) im wesentlichen vertikale, achsparallele Seitenfläche (60) des Lagerblocks (10) eingelassen ist und daß in einem auf einer Seite des Schlitzes (62) gelegenen Teil (10a) des Lagerblocks (10) eine zu der Schlitzebene im wesentlichen senkrechte Gewindebohrung (64) aufgenommen ist, welche einen gegen den auf der anderen Seite der Schlitzebene gelegenen Teil (10b) des Lagerblocks (10) verspannbaren Gewindebolzen (66) aufnimmt.

6. Linearkugellager nach einem der Ansprüche 1 bis 5, dadurch gekennzeichnet, daß die Tragflächen (222a) an gegenüber der Zylinderinnenfläche radial einwärts vorspringenden Tragrippen (270) des Lagerblocks angeordnet sind.

7. Linearkugellager nach einem der Ansprüche 1 bis 6, dadurch gekennzeichnet, daß die Tragflächen (122a) von Rillen in dem Lagerblock gebildet sind.

8. Linearkugellager nach einem der Ansprüche 1 bis 5, dadurch gekennzeichnet, daß die Tragflächen (22a) von Teilbereichen der Zylinderinnenfläche (22) gebildet sind.

9. Linearkugellager nach einem der Ansprüche 1 bis 8, dadurch gekennzeichnet, daß die Führungsstegabschnitte der Halbkäfige (28I, 28II) in der Trennebene (T) miteinander verzapft sind.

10. Linearkugellager nach einem der Ansprüche 1 bis 9, dadurch gekennzeichnet, daß der Lagerblock (10) mit einem Schmierkanalsystem (54, 56) versehen ist, welches von einer auch bei Anbau des Lagerblocks (10) an das Objekt frei zugänglichen Fläche (60) des Lagerblocks (10) ausgeht.

11. Linearkugellager nach Anspruch 10, dadurch gekennzeichnet, daß das Schmierkanalsystem (54, 56) in einer im wesentlichen achsnormalen Ebene einen zu der Anlagefläche (12) im wesentlichen parallelen Primärkanal (54) und einen an diesen Primärkanal anschließenden, von der Anlagefläche (12) her gebohrten und im Bereich der Anlagefläche (12) abgeschlossenen Sekundärkanal (56) umfaßt, welcher zwischen benachbarten Kugelschleifen (26) in die Zylinderinnenfläche (22) mündet.

12. Linearkugellager nach einem der Ansprüche 1 bis 11, dadurch gekennzeichnet, daß an den Hakenflanschen (28b) im Bereich einer axial äußeren und radial inneren Ringkante ein Dichtelement (48) zur Anlage an der Welle angebracht ist.

13. Linearkugellager nach einem der Ansprüche 2 und 4 bis 12, dadurch gekennzeichnet, daß an der Ringöffnung (24) zugehörigen Kanten der Käfigbaugruppe (28) Dichtleisten (42) zur Anlage an der Welle angebracht sind.

14. Linearkugellager nach einem der Ansprüche 1 bis 13, dadurch gekennzeichnet, daß die Käfigbaugruppe (28) durch Sicherungsringe (38) in axialer Richtung gesichert ist, welche in an dem Lagerblock (10) angeformten Aufnahmenuten (40) eingerastet sind.

15. Linearkugellager nach einem der Ansprüche 1 bis 14, dadurch gekennzeichnet, daß der Abstand der Zylinderinnenfläche (22) von der Aufspannfläche (12) ca. 25 % bis ca. 50 % des Durchmessers der zugehörigen Welle beträgt, vorzugsweise ca. 30 % bis ca. 50 °.

16. Linearkugellager nach einem der Ansprüche 1 bis 15, dadurch gekennzeichnet, daß der Abstand einer achsparallelen, zur Aufspannfläche (12) im wesentlichen senkrechten Seitenfläche (60) des Lagerblocks (10) von der Zylinderinnenfläche ca. 65 % bis ca. 120 % des Durchmessers der zugehörigen Welle beträgt, vorzugsweise ca. 75 % bis ca. 120 %.

17. Linearkugellager nach Anspruch 5, dadurch gekennzeichnet, daß der zu der Lagerfläche im wesentlichen parallele Schlitz (62) bis annähernd an den Teilkreis der Rückführungskanäle (33) herangeführt ist.

## Claims

1. Linear ball bearing for the guidance of an object on a cylindrical shaft, comprising a bearing block (10)

with a substantially plane abutment face (12) formed thereon for abutment on the object,

with securing means (16, 18, 20) for connection with the object and

with a plurality of ball loops (26) which are arranged each in one radial plane (R) — in relation to the axis (A) of the cylindrical shaft — and each comprise a radially inner, carrying ball row (26a), a radially outer, returning ball row (26b) and — close to the axial ends of the bearing block (10) — reversal bend ball rows (26c) for connection of a radially inner, carrying ball row (26a) and a radially outer, returning ball row (26b) in each case,

where the radially inner ball rows (26a) are supported radially outwards on axially extending carrier faces (22a) distributed over an inner cylindrical surface (22) and run between guide faces (28aa) spaced in the peripheral direction,

where the radially outer ball rows (26b) extend in return guide passages (30),

where the reversal bend ball rows (26c) are guided by a convex, axially outwardly directed annular bead face (32) and by concave, axially inwardly directed, semi-circular channels (28c),

where the guide faces (28aa) and the semi-circular channels (28c) are arranged on a cage assembly (28) which possesses guide flanges (28a) extending over the length of the carrier faces (22a) and, on the axial ends of the guide flanges (28a), hook flanges (28b) connecting the guide flanges (28a) and comprising the semi-circular channels (28c),

where these hook flanges (28b) rest each with an axially inwardly directed hook end face (28e) on an axially outwardly directed passage opening face (36) of the return guide passages (30),

where these hook flanges (28b) each comprise an external circumferential surface (28d) for abutment on an internal circumferential surface (34) and

where the cage assembly (28) is divided, in a plane (T) of separation normal to the axis and intersecting the guide flanges (28a), into two half cages (28I, 28II),

characterised in that the carrier faces (22a), the return guide passages (30), the internal circumferential faces (34) and the axially outwardly directed passage opening faces (36) are formed on the material of the one-piece bearing block (10).

2. Linear ball bearing according to Claim 1, characterised in that it is made with an opening (24) (ring opening) for partial grasping around the cylindrical shaft.

3. Linear ball bearing according to Claim 1, characterised in that it is formed to surround the cylindrical shaft completely.

4. Linear ball bearing according to one of Claims 1 to 3, characterised in that it comprises pressure-application means (66) for adjusting the radial play.

5. Linear ball bearing according to Claims 1, 2 and 4, characterised in that in the case of arrangement of the abutment face (12) on a side of the bearing block (10) placed away from the annular opening (24) a slot (62) substantially parallel to the bearing face is let into a side face (60), substantially vertical and axially parallel to the abutment face (12), and in that in a part (10a) of the bearing block (10) placed on one side of the slot (62) there is accommodated a threaded bore (64) substantially perpendicular to the plane of the slot, which bore accommodates a threaded bolt (66) which can be tightened against the part (10b) of the bearing block (10) placed on the other side of the plane of the slot.

6. Linear ball bearing according to one of Claims 1 to 5, characterised in that the carrying faces (222a) are arranged on carrier ribs (270) of the bearing block which protrude radially inwards in relation to the cylinder inner surface.

7. Linear ball bearing according to one of Claims 1 to 6, characterised in that the carrier faces (122a) are formed by channels in the bearing block.

8. Linear ball bearing according to one of Claims 1 to 5, characterised in that the carrier faces (22a) are formed by partial zones of the cylinder inner surface (22).

9. Linear ball bearing according to one of Claims 1 to 8, characterised in that the guide flange sections of the half-cages (28I, 28II) are mortised with one another in the plane (T) of separation.

10. Linear ball bearing according to one of Claims 1 to 9, characterised in that the bearing block (10) is provided with a lubricating passage system (54, 56) which issues from a face (60) of the bearing block (10) which is freely accessible even when the bearing block (10) is mounted on the object.

11. Linear ball bearing according to Claim 10, characterised in that the lubricating passage system (54, 56) comprises, in a substantially axially normal plane, a primary passage (54) substantially parallel to the abutment face (12) and a secondary passage (56) adjoining this primary passage, drilled from the abutment face (12) and closed off in the region of the abutment face (12), which secondary passage opens between adjacent ball loops (26) into the cylinder inner surface (22).

12. Linear ball bearing according to one of Claims 1 to 11, characterised in that a seal element (48) for abutment on the shaft is fitted on the hook flanges (28b) in the region of an axially outer and radially inner annular edge.

13. Linear ball bearing according to one of Claims 2 and 4 to 12, characterised in that sealing strips (42) for abutment on the shaft are fitted on edges of the cage assembly (28) pertaining to the annular opening (24).

14. Linear ball bearing according to one of Claims 1 to 13, characterised in that the cage assembly (28) is secured in the axial direction by securing rings (38) which have snapped into reception grooves (40) formed on the bearing block (10).

15. Linear ball bearing according to one of Claims 1 to 14, characterised in that the distance of the cylinder inner surface (22) from the attachment face (12) amounts to about 25 % to about 50 % of the diameter of the pertinent shaft, preferably about 30 % to about 50 %.

16. Linear ball bearing according to one of Claims 1 to 15, characterised in that the distance of an axially parallel side face (60) of the bearing block (10), substantially perpendicular to the attachment surface (12), from the cylinder inner surface amounts to about 65 % to about 120 % of the diameter of the pertinent shaft, preferably about 75 % to about 120 %.

17. Linear ball bearing according to Claim 5, characterised in that the slot (62), which is substantially parallel to the bearing surface, is brought to approximately the pitch circle of the return guide passages (33).


## Revendications

1. Roulement à billes linéaire pour guidage d'un objet sur un arbre cylindrique, comprenant un bloc-palier (10)

avec une surface essentiellement plance (12), formée sur le palier, pour faire la jonction sur l'objet,

avec des moyens de fixation (16, 18, 20) pour le raccordement avec l'objet et

avec plusieurs boucles de billes (26), placées chaque fois dans un plan radial (R) — par rapport à l'axe (A) de l'arbre cylindrique — et comportant chacune une rangée de billes porteuse (26a) radialement intérieure, une rangée de retour (26b) radialement extérieure et — proche des extrémités axiales du bloc-palier (10) — des rangées de billes en arc de renvoi (26c) pour le raccordement chaque fois d'une rangée porteuse (26a) radialement intérieure et d'une rangée de retour (26b) radialement extérieure,

les rangées (26a) radialement intérieures étant appuyées radialement vers l'extérieur sur des surfaces portantes (22a) passant axialement au-dessus de la surface intérieure du cylindre (22) et se dirigeant entre les surfaces de guidage (28aa) espacées dans une direction périphérique,

les rangées (26b) radialement extérieures débouchant dans des canaux de guidage de retour (30),

les rangées en arc de renvoi (26c) étant guidées à travers une surface d'anneau en bourrelet (32) convexe, orientées axialement vers l'extérieur, et à travers des conduits en demi-cercle (28c) concaves, orientés axialement vers l'intérieur,

les surfaces de guidage (28aa) et les conduits en demi-cercle (28c) étant disposés sur un module cage (28) muni de filets de guidage (28a) s'étendant sur toute la longueur des surfaces portantes (22a) et de brides à crochets (28b) présentant des conduits en demi-cercle, se raccordant aux brides à crochets à leurs extrémités axiales,

ces brides à crochets (28b) étant chacune adjacentes par une surface terminale de brides (28e) orientées axialement vers l'intérieur à une surface d'embouchure (36) des canaux de guidage de retour, orientée axialement vers l'extérieur,

ces brides à crochets (28b) présentant chaque fois une surface de pourtour extérieur (28d) destinée à faire la jonction avec une surface de pourtour intérieur (34) et

le module cage (28) étant divisé en deux demi-cages (28I, 28II) dans un plan de séparation (T) normal à l'axe, coupant les filets de guidage (28a),

caractérisé par le fait que les surfaces portantes (22a), les canaux de guidage de retour (30), les surfaces de pourtour intérieur (34) et les surfaces d'embouchure des canaux (36) orientées vers l'extérieur sont formés sur le matériau du bloc-palier (10) réalisé d'une seule pièce.

2. Roulement à billes linéaire selon la revendication 1, caractérisé par le fait qu'il est réalisé avec un orifice (24), (orifice annulaire) pour envelopper partiellement l'arbre cylindrique.

3. Roulement à billes linéaire selon la revendication 1, caractérisé par le fait qu'il est formé de façon à envelopper complètement l'arbre cylindrique.

4. Roulement à billes linéaire selon l'une des revendications 1 à 3, caractérisé par le fait qu'il comprend des pièces de serrage (66) pour le réglage du jeu radial.

5. Roulement à billes linéaire selon les revendications 1, 2 et 4, caractérisé par le fait que, pour le positionnement de la surface de jonction (12) sur un côté du bloc-palier (10) éloigné de l'orifice annulaire (24), une fente (62), sensiblement parallèle à la surface du roulement, est ménagée dans une surface latérale (60) du bloc-palier (10), sensiblement verticale, parallèle à l'axe par rapport à la surface de jonction (1 2) et par le fait que dans une partie (10a) du bloc-palier (10) sur un côté de la fente (62), un taraudage (64) sensiblement vertical par rapport au plan de la fente est exécuté, dans lequel vient se placer un boulon fileté (66) vissable contre la partie (10b) du bloc-palier (10) située sur l'autre côté du plan de la fente.

6. Roulement à billes linéaire selon l'une des revendications 1 à 5, caractérisé par le fait que les surfaces portantes (222a) sont placées sur des nervures porteuses (270), saillant radialement vers l'intérieur par rapport à la surface interne du cylindre.

7. Roulement à billes linéaire selon l'une des revendications 1 à 6, caractérisé par le fait que les surfaces portantes (122a) sont formées 35 par des gorges dans le bloc-palier.

8. Roulement à billes linéaire selon l'une des revendications 1 à 5, caractérisé par le fait que les surfaces portantes (22a) sont formées par des zones partielles de la surface intérieure du cylindre (22).

9. Roulement à billes linéaire selon l'une des revendications 1 à 8, caractérisé par le fait que les sections de filets de guidage des demi-cages (28I, 28II) sont assemblées l'une avec l'autre dans le plan de séparation (T).

10. Roulement à billes linéaire selon l'une des revendications 1 à 9, caractérisé par le fait que le bloc-palier (10) est muni d'un système de canaux de graissage (54, 56), qui débouche depuis une surface facilement accessible (60) du bloc-palier (10) même lors du montage du bloc-palier (10) sur l'objet.

11. Roulement à billes linéaire selon la revendication 10, caractérisé par le fait que le système des canaux de graissage (54, 56) comprend, dans un plan sensiblement normal à l'axe, un canal primaire (54) sensiblement parallèle à la surface de jonction (12) et un canal secondaire (56) adjacent au canal primaire, alézé à partir de la surface de jonction (12) et fermé dans la zone de la surface de jonction (12), celui-ci débouchant entre les boucles de billes (26) voisines dans la surface intérieure du cylindre (22).

12. Roulement à billes linéaire selon l'une des revendications 1 à 11, caractérisé par le fait qu'un élément d'étanchéité (48) est placé sur les brides à crochets (28b) dans la zone d'une arête annulaire axialement extérieure et radialement intérieure pour faire la jonction avec l'arbre.

13. Roulement à billes linéaire selon l'une des revendications 2 et 4 à 12, caractérisé par le fait que des languettes d'étanchéité (42) sont placées sur les arêtes du module cage (28) appartenant à l'orifice annulaire (24) pour faire la jonction avec l'arbre.

14. Roulement à billes linéaire selon l'une des revendications 1 à 13, caractérisé par le fait que le module cage (28) est bloqué en direction axiale par des bagues d'arrêt (38), encliquetées dans les rainures réceptrices (40) formées sur le bloc-palier (10).

15. Roulement à billes linéaire selon l'une des revendications 1 à 14, caractérisé par le fait que l'espacement de la surface intérieure du cylindre (22) depuis la surface de fixation (12) est d'environ 25 % à environ 50 % du diamètre de l'arbre correspondant, de préférence d'environ 30 % a environ 50 %.

16. Roulement à billes linéaire selon l'une des revendications 1 à 15, caractérisé par le fait que l'espacement de la surface latérale (60) du bloc-palier (10) parallèle à l'axe, sensiblement perpendiculaire à la surface de fixation (12) depuis la surface intérieure du cylindre est d'environ 65 % à environ 120 % du diamètre de l'arbre correspondant, de préférence d'environ 65 % à environ 120 %.

17. Roulement à billes linéaire selon la revendication 5, caractérisé par le fait que la fente (62) sensiblement parallèle à la surface de roulement s'approche à peu près du cercle primitif des canaux de guidage de retour (33).

Fig.1

Fig.2

Fig.3

Fig. 4

Fig. 5

Fig. 6

Fig. 7

Fig. 8